# EUROPÄISCHE PATENTANMELDUNG

(11) **EP 0 776 694 A2**
(43) Veröffentlichungstag der Anmeldung: **04.06.1997**
(21) Anmeldenummer: 96119188.9
(22) Anmeldetag: 29.11.1996
(51) Int. Cl.: B01J 19/08, C02F 1/48

(54) **Aufnahmekörperanordnung**

(30) Priorität: 30.11.1995 DE 19544605
(71) Anmelder: Hess & Volk GmbH, 96253 Untersiemau (DE)
(72) Erfinder: Volk, Hellmut, 96450 Coburg (DE); Hess, Walter, 96253 Untersiemau (DE)
(74) Vertreter: Reinhard - Skuhra - Weise & Partner

(57) **Zusammenfassung**

Bei einer Anordnung aus wenigstens einem tubus- bzw. rohrförmigen Aufnahmekörper 13, der insbesondere für Quarz- bzw. Gesteinsmehl 16 vorgesehen ist, ist jeder rohrförmige Aufnahmekörper 13 entweder einzeln oder mehrfach mittels einer Rohrleitungs-Befestigungseinrichtung 18, vorzugsweise lösbar, an einer Medien, wie z.B. Wasser, führenden Rohrleitung 11 mit koaxialer Orientierung befestigbar und im Zusammenhang mit der Übertragung von elektrischen und/oder elektronischen Wellen und Informationen auf dieses Medium verwendbar.

## Beschreibung

Die Erfindung betrifft eine Anordnung aus wenigstens einem rohrförmigen Aufnahmekörper, insbesondere für Quarz- bzw. Gesteinsmehl.

Nach neueren Erkenntnissen lassen sich strömende, flüssige, feste oder gekörnte rieselfähige, pastenartige oder gasförmige Mediem durch elektrische und/oder elektromagnetische Wellen und Informationen beeinflussen. Mit der vorliegenden Erfindung soll im Zusammenhang mit dieser Einflußnahme eine geeignete Anordnung verfügbar gemacht werden, die hierzu einen Beitrag liefert.

Es gibt Gebiete und Naturerscheinungen, die wissenschaftlichen Untersuchungen nur schwer zugänglich sind bzw. die von der Naturwissenschaft als Humbug bezeichnet und nicht ernst genommen werden, weil sie sich oft der exakten Messung durch bestehende physikalische und technische Meßgeräte entziehen. Dazu gehören beispielsweise die durch sog. Erdstrahlen hervorgerufenen elektrischen oder elektromagnetischen Felder und als Störzonen bezeichnende Verzerrungen dieser Felder. Es besteht in der Tat und unbestritten ein natürliches elektrisches Feld, das den gesamten Erball umgibt. Insbesondere durch Wasseradern, aber auch durch Erdverwerfungen und sonstige Unregelmäßigkeiten kommt es zu einer mehr oder weniger starken Veränderung des natürlichen elektrischen Feldes. Das elektrische Feld mit seinen Verzerrungen, die zu einer Verstärkung oder Schwächung der Feldliniendichte führen, wirken in biologischer Hinsicht auf Lebewesen ein. Es ist erwiesen, daß bestimmte Krankheiten an bestimmten Plätzen gehäuft auftreten, und beispielsweise durch radiästhetische Untersuchungen hat sich gezeigt, daß an diesen Plätzen das natürliche elektrische Feld verändert ist, so daß Stör- und Reizzonen entstehen. Vor allem im Bereich von Kreuzungspunkten von Wasseradern bilden sich diese Störzonen aus, die eine meist schädliche Wirkung auf organisches Leben ausüben.

Neben diesem vom Erdball beeinflußten elektrischen Feld und den hieraus resultierenden Strahlenbelastungen ist es auch bekannt, daß von außen her Strahlen auf den Menschen einwirken. Insbesondere ist hierbei auf die kosmische oder Höhenstrahlung hinzuweisen. Es handelt sich dabei um eine Ultrastrahlung, die aus dem Weltraum und zum Teil auch von der Sonne auf die Erde einfällt und sich als sehr energiereiche Teilchenstrahlung darstellt. Der genaue Ursprung, vor allem der physikalische Vorgang, in dem die Teilchen ihre außerordentlich hohen Energien erhalten, ist noch weitgehend unbekannt. Man weiß allerdings, daß sich die Höhenstrahlung im wesentlichen aus drei Komponenten zusammensetzt, nämlich erstens der Neutronen-Komponente der Anstoßnukleonen, zweitens der harten oder durchdringenden Komponente, die aus µ-Mesonen besteht, und drittens der weichen Komponente aus energiereichen Lichtquanten und Elektronen. Besonders energiereiche Strahlungsquanten der dritten Komponente rufen ganze Teilchenschauer hervor, die sog. Kaskadenstrahlung. Es sind Schauer mit einigen Millionen Teilchen nachgewiesen worden. Nicht voll geklärt ist der Einfluß der Höhenstrahlung auf die organische Natur. In größeren Höhen ist die kosmische Strahlung stärker als in tieferen Lagen. Bekannt ist, daß Bergvölker, beispielsweise in Tibet, Menschen mit überdurchschnittlich hohem Alter aufweisen, was sicherlich auch auf die dort herrschende höhere kosmische Strahlung zurückzuführen ist. So fließt in diesen Höhen ein wesentlich energiereicheres Wasser als in tiefen Lagen. Auch ist die Nahrung, die von diesen Menschen aufgenommen wird, aufgrund der auf sie einwirkenden starken Höhenstrahlung weit energiereicher. All dies führt zu der hohen Lebenserwartung der in großen Höhen lebenden Menschen, obwohl die medizinische Versorgung weiter hinter der uns zur Verfügung gestellten steht.

Aus den obigen Ausführungen läßt sich ohne Schwierigkeiten ableiten, daß ein gesünderes und längeres Leben dann erreicht werden kann, wenn beispielsweise Wasser oder andere Medien, die wir einnehmen oder mit denen wir in Berührung kommen, eine höhere Energie aufweisen als dies bisher der Fall ist.

Mit der Erfindung soll dem Bedürfnis von Menschen Rechnung getragen werden, die im Zusammenhang mit der Beeinflussung der eingangs angesprochenen Medien eine einfach montierbare und kompakte Anordnung suchen.

Erfindungsgemäß sind zur Lösung dieser Aufgabe die im Anspruch 1 genannten Merkmale vorgesehen. Bevorzugte Merkmale, die die Erfindung vorteilhaft weiterbilden, sind den nachgeordneten Ansprüchen zu entnehmen.

Demgemäß besteht die Anordnung in ihrer einfachsten Ausgestaltung aus einem einzigen rohrförmigen Quarzmehl-gefüllten Aufnahmekörper, der mittels einer Befestigungseinrichtung in Form eines Klettverschlusses an einer Rohrleitung lösbar befestigbar ist. In einer anderen Ausführungsform können drei rohrförmige Aufnahmekörper um eine medienführende Rohrleitung angeordnet und mittels koaxial voneinander beabstandeter Klettverschlüsse lösbar befestigt sein.

Gemäß einer anderen einfachen Ausgestaltung der Erfindung kann die Anordnung zwei rohrförmige Aufnahmekörper aufweisen, die an gegenüber liegenden Seiten einer medienführenden Rohrleitung mittig mittels einer lösbaren Klemmschelleneinrichtung befestigt werden können.

Gemäß einer weiteren Ausgestaltung der Erfindung kann die Anordnung drei rohrförmige Aufnahmekörper aufweisen, die nicht mittig, sondern im Bereich ihrer jeweiligen Enden in Klemmschalen der jeweils dort vorgesehenen Klemmschaleneinrichtungen aufgenommen und darüber an der Rohrleitung befestigt werden können.

Jeder Aufnahmekörper ist vollständig mit Quarz- bzw. Gesteinsmehl gefüllt, dem bevorzugt mikrohochfrequenzphysikalische Schwingungen aufgeprägt sind, wobei die durch den Magnetismus informierten Feldlinien das durchfließende Material bzw. Medium mit rechtspolarisierten Schwingungen durchdringen.

Nach einer weiteren Ausgestaltung der Erfindung sind die Aufnahmekörper zwischen einer äußeren und einer inneren jeweils konzentrisch bzw. koaxial liegenden Magnetfolie angeordnet, wobei zwischen der inneren Magnetfolie und der das durchströmende Medium aufnehmenden Rohrleitung eine konzentrische bzw. koaxiale Lage aus Eisenpapier angeordnet ist, wobei somit die Aufnahmekörper mittels der beiden Magnetfolien auf die Rohrleitung aufgebracht werden. Weiterhin weist die Anordnung als Außenwand ein mit Radialabstand zu den Aufnahmekörpern bzw. der äußeren Magnetfolie liegendes rohrförmiges Lochblech auf, das im Bereich seiner beiden axialen Enden jeweils in Klemmschalen der Klemmschaleneinrichtung gehalten ist.

Durch die vorgesehene Rohrleitungs-Befestigungseinrichtung ist eine leichte Befestigung der Anordnung auch für den Laien möglich, wobei die Kompaktheit der Anordnung beibehalten werden kann.

Bevorzugt sind bei einer weiteren Ausgestaltung der Erfindung insgesamt 9 rohrförmige Aufnahmekörper mit jeweils gleichem Abstand zueinander radial angeordnet, wobei die Übertragung von elektrischen und/oder elektromagnetischen Wellen und Informationen, also der Informationsaustausch, in Form von Implusion vorgesehen ist. Die Implusion bewirkt eine rechtsdrehende Kraft, die verdichtend und energiesparend ist.

Die Anordnung eignet sich vorteilhaft nicht nur zur Behandlung von Wasser, sondern auch zur Behandlung von Treibstoffen wie Diesel, Kerosin, Benzin sowie Heizöl und Heizgas, insbesondere zur Verbrauchsreduzierung.

Nachfolgend wird die Erfindung unter Bezugnahme auf die beigefügten Zeichnungen näher erläutert. Es zeigen:
- Fig. 1: ein erstes Ausführungsbeispiel einer erfindungsgemäßen Anordnung, bei der nur ein rohrförmiger Aufnahmekörper an einer Rohrleitung lösbar befestigt dargestellt ist;
- Fig. 2: einen Schnitt entlang der Schnittlinie II-II durch die Anordnung gemäß Fig. 1;
- Fig. 3: eine schematische Seitenansicht eines weiteren Ausführungsbeispiels einer erfindungsgemäßen Anordnung;
- Fig. 4: einen Schnitt entlang der Schnittlinie IV-IV in Fig. 3;
- Fig. 5: eine schematisierte Seitenansicht eines weiteren Ausführungsbeispiels einer erfindungsgemäßen Anordnung mit zwei zentral befestigten rohrförmigen Aufnahmekörpern;
- Fig. 6: einen Schnitt entlang der Schnittlinie VI-VI in Fig. 5;
- Fig. 7: eine Seitenansicht eines weiteren Ausführungsbeispiels einer erfindungsgemäßen Anordnung mit drei endseitig gehaltenen rohrförmigen Aufnahmekörpern;
- Fig. 8: einen Schnitt entlang der Schnittlinie VIII-VIII in Fig. 7;
- Fig. 9: eine Seitenansicht eines weiteren Ausführungsbeispiels einer erfindungsgemäßen Anordnung mit neun koaxialen Aufnahmekörpern;
- Fig. 10: einen Längsteilschnitt durch die Anordnung gemäß Fig. 9 in vergrößerter Darstellung; und
- Fig. 11: einen Schnitt entlang einer Schnittlinie XI-XI in Fig. 10.

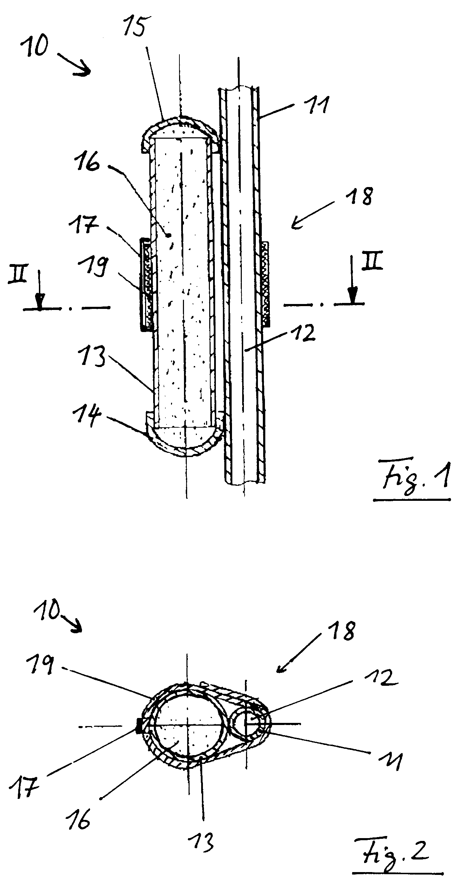

In Fig. 1 ist ein erstes Ausführungsbeispiel einer erfindungsgemäßen Anordnung 10 in Schnittansicht und befestigt an einer Rohrleitung 11 für ein darin strömendes Medium 12 dargestellt. Die Anordnung besteht hier aus einem einzigen rohrförmigen bzw. tubusförmigen Aufnahmekörper 13 aus Edelstahl, dessen Enden mittels einer Verschlußkappe 14 bzw. 15 verschlossen sind. Die Verschlußkappen 14 und 15 bestehen ebenfalls aus Edelstahl und sind mit dem Aufnahmekörper 13 in nicht dargestellter Weise verschweißt. Alternativ können die Verschlußkappen auch aus Kunststoffstopfen bestehen.

Das Innere des rohrförmigen Aufnahmekörpers 13 ist vollständig bis zu den Verschlußkappen 14 und 15 mit Quarz- bzw. Gesteinsmehl 16 gefüllt. Die Verschlußkappen 14 bzw. 15 überlappen bei dem dargestellten Ausführungsbeispiel die beiderseitigen Enden des rohrförmigen Aufnahmekörpers 13, können jedoch auch bündig mit dem Außenumfang verschweißt sein.

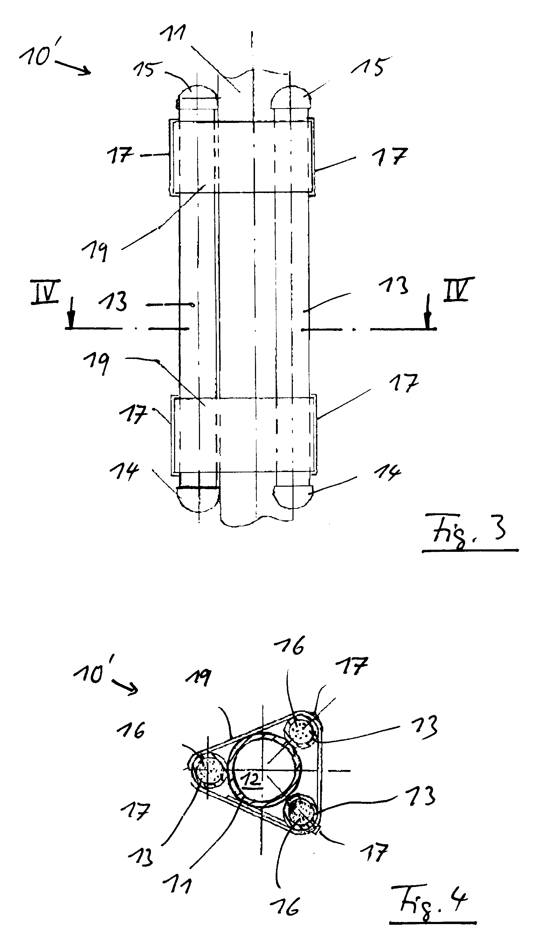

An der Außenseite des rohrförmigen Aufnahmekörpers 13 ist ein Metallbügel 15 befestigt, der einen Teil einer RohrleitungsBefestestigungseinrichtung 18 bildet, zu der auch ein Klettverschlußband 9 gehört, das durch den Metallbügel geführt ist. Der Metallbügel 17 ist bevorzugt zur Axialrichtung des rohrförmigen Aufnahmekörpers 13 orientiert und an diesem festgeschweißt. Mittels des Klettbandes 19 kann der rohrförmige Aufnahmekörper 13, der in Form einer Patrone ausgebildet ist, an dem Rohr 11 lösbar derart befestigt werden, daß er entweder unmittelbar anliegt, wenn die Verschlußkappen 14 und 15 bündig mit dem Außenumfang des rohrförmigen Aufnahmekörpers 13 fluchten, oder so, daß der seitliche Abstand etwa bis zu 30 mm beträgt. Wesentlich ist nur, daß der rohrförmige Aufnahmekörper 13 koaxial zur Rohrleitung 11 orientiert ist und seine zuverlässige Befestigung erreicht ist. Die in Fig. 1 und 2 dargestellte Anordnung 10 eignet sich besonders für einen mobilen Einsatz bei Wasserleitungsrohren in Hotelzimmern oder dgl.

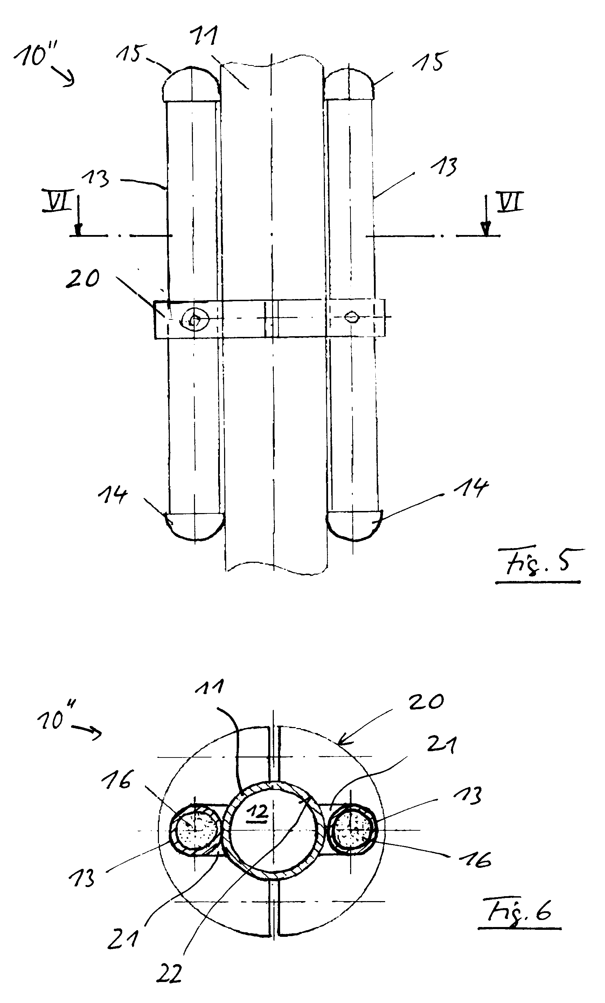

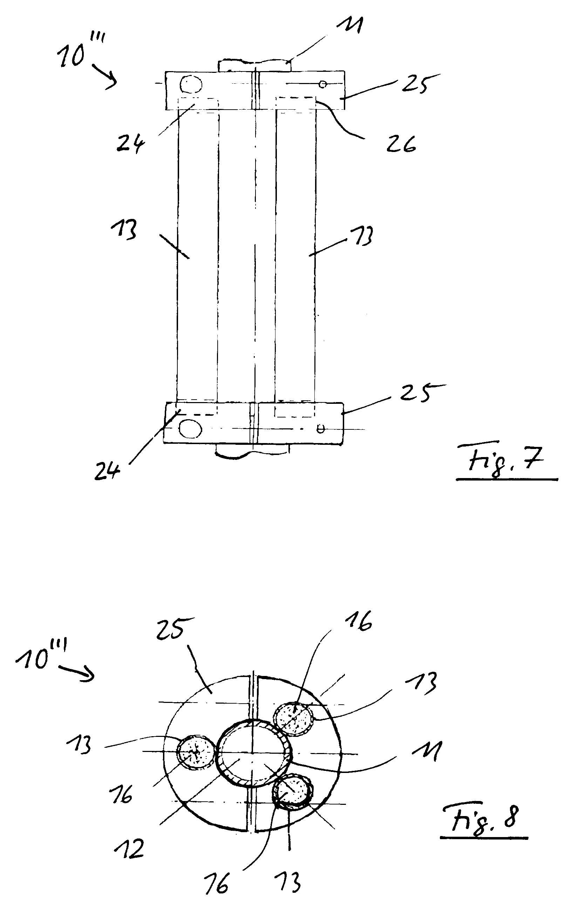

Das in Fig. 3 und 4 dargestellte Ausführungsbeispiel zeigt eine Anordnung 10', bei der insgesamt drei rohrförmige Aufnahmekörper 13 mittels zweier beabstandeter Klettbänder 19 an einer Rohrleitung 11 befestigbar sind, wobei die Klettbänder 19 wiederum an jedem rohrförmigen Aufnahmekörper 13 über einen Metallbügel 17 gehalten sind. Die Zahl der rohrförmigen Aufnahmekörper 13 kann auch vier und mehr betragen, abhängig von dem zur Verfügung stehenden Platz um die Rohrleitung 11.

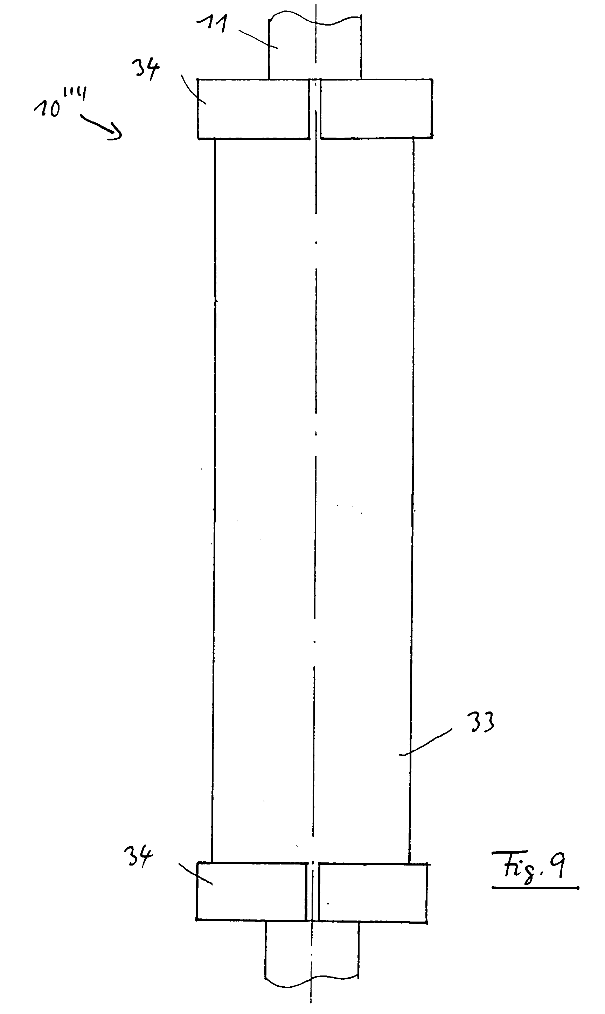

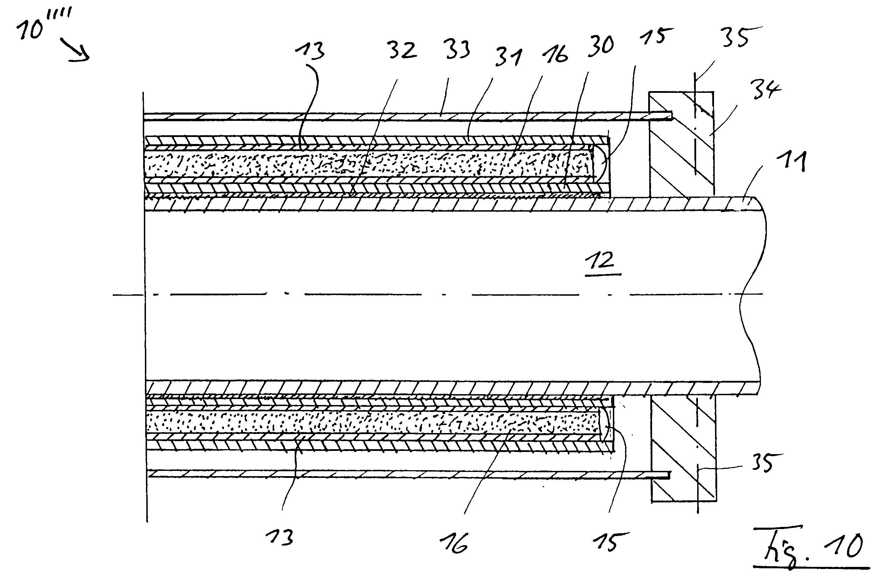

Die Fig. 5 und 6 offenbaren ein weiteres Ausführungsbeispiel einer erfindungsgemäßen Anordnung 10'', bei der zwei rohrförmige Aufnahmekörper 13 mittig mittels einer Rohrleitungs-Befestigungseinrichtung in Form einer Klemmschaleneinrichtung 20 gehalten und koaxial zu einem ein Medium, beispielsweise Wasser, führenden Rohrleitung 11 ausrichtbar und fixierbar sind. Die Klemmschaleneinrichtung 20 besteht aus zwei Klemmschalen mit eingearbeiteten Aufnahmen 21 für jeweils einen rohrförmigen Aufnahmekörper 13 und einem entsprechend der Außenkontur eines Rohres gestalteten Anlageabschnitts 22. Der Aufbau der rohrförmigen Aufnahmekörper 13 entspricht im übrigen dem wie bei dem Ausführungsbeispiel in Fig. 1.

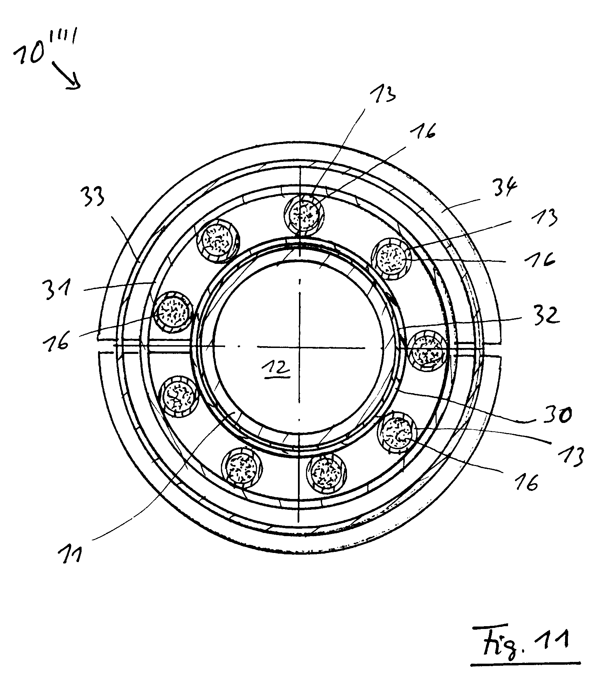

In den Fig. 7 und 8 ist eine weitere Ausgestaltung der Anordnung gezeigt, bei der drei rohrförmige Aufnahmekörper 13 mit ihren jeweiligen Enden jeweils in einer für alle Aufnahmekörper 13 gemeinsamen Klemmschaleneinrichtung 25 haltend in entsprechenden Ausnehmungen 26 gelagert sind. Bei diesem Ausführungsbeispiel besitzt die Anordnung 10''' rohrförmige Aufnahmekörper 13 mit Verschlußstopfen 24, wobei die Enden der rohrförmigen Aufnahmekörper 13 direkt in entsprechenden Ausnehmungen 26 der Klemmschaleneinrichtungen 25 gehalten sind. Die Klemmschalen der Klemmschaleneinrichtungen 20 bzw. 25 werden mittels Imbusschrauben an der Rohrleitung 11 befestigt.

In Fig. 9 ist in Seitenansicht eine weitere Anordnung 10'''' gezeigt, die ebenfalls wie die bisher beschriebenen Anordnungen bei der Übertragung von elektrischen und/oder elektromagnetischen Wellen und Informationen eingesetzt werden kann.

Bei diesem Ausführungsbeispiel, das weiter in den Fig. 10 und 11 dargestellt ist, wird eine Rohrleitung 11 von insgesamt 9 rohrförmigen Aufnahmekörpern umgeben, die auf einer konzentrisch bzw. koaxial zur Achse der Rohrleitung 11 ausgerichteten Umfangsfläche liegen. Selbstverständlich kann die Zahl der Aufnahmekörper und auch ihre spezielle Ausbildung variieren. So kommt als Material für die Aufnahmekörper 13, ebenso wie bei den bisherigen Ausführungsbeispielen, statt Edelstahl auch ein anderes Metall, Kunststoff, Keramik, Glas oder sonstige Werkstoffart in Frage. Die Aufnahmekörper sind innerhalb einer inneren und einer äußeren sie etwa konzentrisch bzw. koaxial umgebenden Hülle angeordnet, nämlich einer inneren Magnetfolie 30 und einer äußeren Magnetfolie 31. Außerdem ist zwischen der inneren Magnetfolie 30 und der Rohrleitung 11 noch Eisenpapier 32 vorgesehen, das je nach Verwendungsart unterschiedliche Stärke aufweist. Mit 33 ist eine rohrförmige Außenwand bezeichnet, die als Lochblech ausgebildet ist und die Aufnahmekörper 13 beabstandet und mit koaxialer Ausrichtung zur Längsachse der Rohrleitung 11 umgibt. Die axialen Enden des Lochblechs 33 greifen in passende Nuten von Klemmschalen 34 ein. Bei 35 existiert eine Verschraubung wie in Fig. 10 angedeutet, mit der die Klemmschalen an der Rohrleitung 11 befestigt werden können.

Das Lochblech 33 kann auch aus einem nichtmetallischen Werkstoff, wie beispielsweise Kohlenstoff, Keramik, Glas usw. bestehen. Ebenso wie die Klemmschalen 34 und die Rohrleitung 11, die in diesem Fall gemeinsam mit den rohrförmigen Aufnahmekörpern 13 und dem Lochblech 33 sowie den Klemmschalen 34 eine Einheit bilden.

Es wird davon ausgegangen, daß die durch den Magnetismus informierten Feldlinien das in der Rohrleitung 11 strömende Medium mit rechtspolarisierten Schwingungen informiert. Dies läßt sich mit einem Halbschatten-Polarimeter, der Kilian-Photographie, der Radiästhesie, der Hautwiderstandsmessung und der Elektropunktiermessung mit einem Bioresonanztherapiegerät oder ähnlichen Geräten überprüfen.

## Patentansprüche

1. Anordnung (10) aus wenigstens einem rohrförmigen Aufnahmekörper (13), insbesondere für Quarz - bzw. Gesteinsmehl (16),
wobei die offenen Enden jedes rohrförmigen Aufnahmekörpers (13) mit einer Verschlußkappe geschlossen sind, wobei das Quarz- bzw. Gesteinsmehl (16) jeden rohrförmigen Aufnahmekörper (13) bis zu den Verschlußkappen (14, 15) vollständig ausfüllt, und aus wenigstens einer jeden rohrförmigen Aufnahmekörper (13) koaxial orientierenden Rohrleitungs-Befestigungseinrichtung (18) besteht.

2. Anordnung (10) nach Anspruch 1, dadurch gekennzeichnet, daß die Verschlußkappen (14, 15) jedes rohrförmigen Aufnahmekörpers (13) aus Edelstahl oder einem Kunststoffstopfen bestehen.

3. Anordnung (10) nach Anspruch 1 oder 2, dadurch gekennzeichnet, daß jeder rohrförmige Aufnahmekörper (13) aus Edelstahl besteht.

4. Anordnung (10) nach Anspruch 2 und 3, dadurch gekennzeichnet, daß jede Verschlußkappe aus Edelstahl an dem zugehörigen rohrförmigen Aufnahmekörper (13) angeschweißt ist.

5. Anordnung (10) nach einem der vorangehenden Ansprüche, dadurch gekennzeichnet, daß jeder rohrförmige Aufnahmekörper (13) wenigstens einen Abschnitt aufweist, der mit einer Rohrleitungs-Befestigungseinrichtung (18) verbunden ist.

6. Anordnung (10) nach Anspruch 5, dadurch gekennzeichnet, daß die Rohrleitungs-Befestigungseinrichtung (18) wenigstens ein Klettverschlußband (9) aufweist.

7. Anordnung (10) nach Anspruch 5, dadurch gekennzeichnet, daß die Rohrleitungs-Befestigungseinrichtung (18) wenigstens eine Klemmschaleneinrichtung (20, 25) aufweist.

8. Anordnung (10) nach Anspruch 7, dadurch gekennzeichnet, daß die Rohrleitungs-Befestigungseinrichtung (18) zwei Klemmschaleneinrichtungen (20, 25) aufweist, wobei jede Klemmschaleneinrichtung (20, 25) Ausnehmungen (26) für das haltende Einsetzen eines Ende jedes rohrförmigen Aufnahmekörpers (13) besitzt.

9. Anordnung (10) nach einem der vorangehenden Ansprüche, dadurch gekennzeichnet, daß durch die Rohrleitungs-Befestigungseinrichtung (18) jeder rohrförmige Aufnahmekörper (13) in einem Rohrleitungsabstand von 0 bis etwa 30 mm koaxial befestigbar ist.

10. Anordnung (10) nach einem der vorangehenden Ansprüche, dadurch gekennzeichnet, daß das in dem rohrförmigen Aufnahmekörper (13) befindliche Quarz- bzw. Gesteinsmehl (16) elektrisch und/oder elektromagnetisch behandelt ist.

11. Anordnung (10) nach einem der vorangehenden Ansprüche, dadurch gekennzeichnet, daß mehrere rohrförmige Aufnahmekörper (13), vorzugsweise äquidistant, um ein durchströmendes Medium (12) führende Rohrleitung (11) herum vorgesehen sind.

12. Anordnung (10) nach Anspruch 11, dadurch gekennzeichnet, daß die Aufnahmekörper (13) zwischen einer äußeren und einer inneren, jeweils konzentrischen bzw. koaxialen Magnetfolie (30, 31) angeordnet sind, wobei zwischen der inneren Magnetfolie (30) und der Rohrleitung (11) eine konzentrische, bzw. koaxiale Lage aus Eisenpapier (32) vorgesehen ist.

13. Anordnung (10) nach Anspruch 11 oder 12, dadurch gekennzeichnet, daß als Außenwandung ein mit radialem Abstand zu den Aufnahmekörpern (13) bzw. der äußeren Magnetfolie (31) konzentrisch, bzw. koaxial umlaufendes Lochblech (33) oder gelochtes Element vorgesehen ist, das im Bereich seiner beiden axialen Enden jeweils in Klemmschalen der Klemmschaleneinrichtung (20, 25) gehalten ist.
